# EUROPEAN PATENT APPLICATION

(11) **EP 2 138 989 A1**
(43) Date of publication of application: **30.12.2009**
(21) Application number: 07739710.7
(22) Date of filing: 26.03.2007
(51) Int. Cl.: G08G 1/16, B60K 28/00, G08B 21/00

(54) **AWAKING DEVICE AND AWAKING METHOD**

(71) Applicant: Pioneer Corporation, Tokyo 153-8654 (JP)
(72) Inventor: YANAGIDAIRA, Masatoshi, Tsurugashima-shi Saitama 350-2288 (JP); YASUSHI, Mitsuo, Tsurugashima-shi Saitama 350-2288 (JP)
(74) Representative: Haley, Stephen
(86) International application number: PCT/JP2007/056272
(87) International publication number: WO 2008/117406

(57) **Abstract**

An awakening device comprises mental state information acquisition means (5) configured to acquire mental state information related to a user, sound output means (4) (speaker) configured to output sound and form a sound image according to the sound thus outputted, fragrance emitting means (9) configured to emit a fragrance, and control means (7) configured to cause the fragrance emitting means (9) to emit a fragrance in accordance with a distance between the user and the sound image formed by the sound output means (4) in a case where the user has been determined as having transitioned to a specific state based on the mental state of the user.

## Description

### TECHNICAL FIELD

The present invention relates to an awakening device and awakening method for awakening a user by a sound image configured by an outputted sound.

### BACKGROUND ART

A large number of ideas for mounting a doze prevention device in vehicles of recent years have been studied. A doze prevention device of prior art is mounted inside the vehicle, for example. Specifically, this doze prevention device comprises a camera and an air cannon. The camera is disposed at the front of the vehicle, and comprises a function of taking a picture of the driver of the vehicle. The cannon has a function of emitting air toward the driver.

The doze prevention device of prior art comprises a computer. When this computer detects that the driver is in a dozing state based on the image processing result of the driver photograph taken by the camera, a burst of air is emitted toward the face of the driver from the air cannon. The driver awakens as a result of the stimulation provided by the burst of air thus emitted, enabling the driver to continue to drive the vehicle safely. At this time, a further awakening effect can be expected by including particles having an awakening fragrance in the burst of air (refer to JP, A, 2005-202599).

### DISCLOSURE OF THE INVENTION

### Problem to be Solved by the Invention

Nevertheless, in general it has been known that a person's sense of smell readily grows accustomed to an odor even if that odor is slightly strong. Thus, even if a driver thus receives a burst of air having a certain smell, the driver will gradually grow accustom to that smell, limiting the awakening action given to the driver by such a burst of air.

The above-described problem is given as one example of the problems that are to be solved by the present invention.

### Means of Solving the Problem

To solve the foregoing problem, the invention according to claim 1 is an awakening device comprising: mental state information acquisition means configured to acquire mental state information of a user; sound output means configured to output sound and form a sound image according to the sound outputted; fragrance emitting means configured to emit a fragrance; and control means configured to cause the fragrance emitting means to emit a fragrance in accordance with a distance between the user and the sound image formed by the sound output means in a case where it has been determined that the user has transitioned to a specific state based on the mental state of the user.

To solve the foregoing problem, the invention according to claim 7 is an awakening method comprising the steps of: a mental state information acquiring step for acquiring mental state information related to a user by using user mental state information acquisition means; a sound output step for outputting sound from sound output means and forming a sound image according to the sound outputted; and a control step for causing the fragrance emitting means to emit a fragrance in accordance with a distance between the user and the sound image formed by the sound output means in a case where it has been determined that the user has transitioned to a specific state based on the mental state information of the user.

### BRIEF DESCRIPTION OF THE DRAWINGS

FIG. 1 is a block diagram illustrating a configuration example of the awakening device of the embodiment.
FIG. 2 is a diagram illustrating an example of paths of the formed sound image.
FIG. 3 is a diagram illustrating an example of paths of the formed sound image.
FIG. 4 is a diagram illustrating an example of paths of the formed sound image.
FIG. 5 is a flowchart illustrating an example of the procedure of the sound image movement control process in which the sound image is moved in accordance with a movement pattern.
FIG. 6 is a flowchart illustrating an example of the procedure of the sound image movement control process in which the sound image is moved in accordance with a movement pattern.
FIG. 7 is a diagram illustrating an example of all waveforms of the breathing of a driver.
FIG. 8 is a detailed diagram illustrating the latter half of a specific range illustrated in FIG. 7, in detail as enlarged.
FIG. 9 is a detailed diagram illustrating the latter half of a specific range illustrated in FIG. 7, in detail as enlarged.
FIG. 10 is a diagram illustrating an example of the change in the interval of the zero cross-points of all waveforms of the breathing of a driver illustrated in FIG. 7.

### BEST MODE FOR CARRYING OUT THE INVENTION

The following describes an embodiment of the present invention with reference to accompanying drawings.

### Embodiment 1

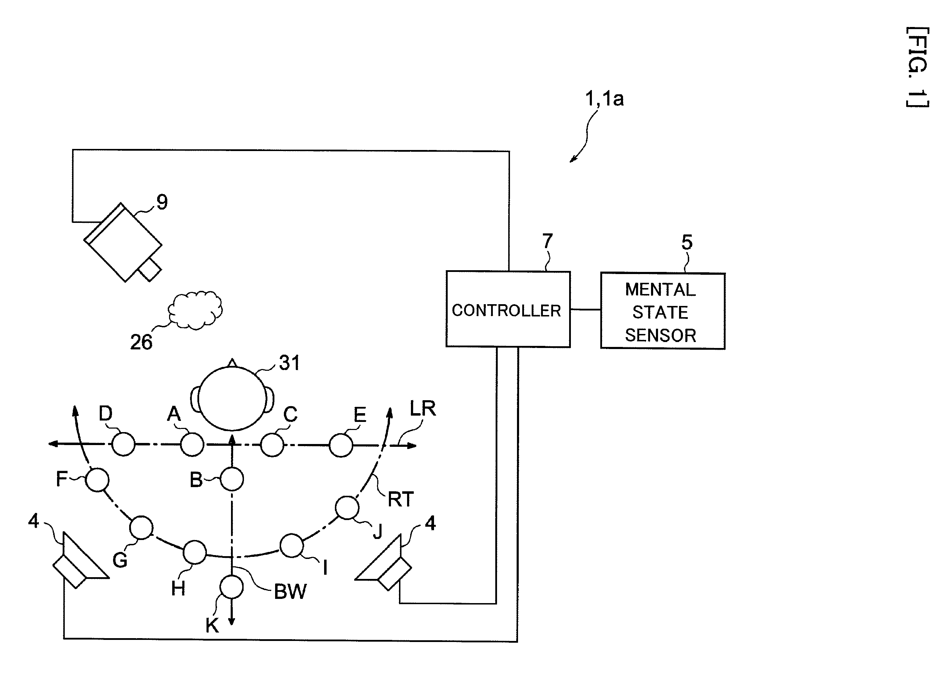

FIG. 1 is a block diagram illustrating a configuration example of an awakening device 1 of embodiment 1.
The awakening device 1, for example, is mounted in a vehicle (not shown) having a driver 31 as an example of the user. This awakening device 1 comprises a mental state sensor 5, a controller 7, a fragrance emitting part 9 (fragrance producing air cannon), and a speaker 4.

The mental state sensor 5 (mental state acquisition means) has a function of acquiring the mental state of the driver 31. Specifically, this mental state sensor 5 has a function of acquiring bio-information related to the driver 31. Examples of the bio-information provided include the heart rate of the driver, for example. The mental state sensor 5 outputs the bio-information acquired in relation to the driver to the controller 7. The mental state sensor 5 is a heart rate sensor installed to the steering wheel of the vehicle, for example.

The speaker 4 has a function of outputting sound, and the awaking device 1 has the plural speakers 4. This plural speakers 4 has a function of outputting chords related to played music and controlling arpeggios. The plural speakers 4 (sound output means) has a function of utilizing the level difference and phase difference of the outputted left and right sounds to form a sound image, according to the control performed by the controller 7 described later. According to the driver's sense of hearing, the sound image formed by the plural speakers 4 is heard as if disposed at a specific location, based on that level difference and phase difference.

The controller 7 is connected to the mental state sensor 5, the fragrance emitting part 9 (aroma presenting means), and the speakers 4. This controller 7 (control means) has a function of determining whether or not the driver is in a specific state based on the bio-information from the mental state sensor 5.

In this embodiment, the controller 7 determines whether or not the driver has transitioned from a normal state to a sleepy state based on this bio-information. It should be noted that the states of the driver that are determined by the controller 7 are not limited to a normal state and sleepy state, allowing determination of a transition from a normal state to a state of tension or the reverse.

In this embodiment, in a case where this controller 7 determines that the driver has transitioned to a specific state, for example, the controller 7 has a function of causing the fragrance emitting part 9 to emit a fragrance in accordance with the distance between the sound image formed by the plural speakers 4 and the driver. The fragrance emitting part 9 has a housing that houses the fragrance. A pair of the housing of the fragrance emitting part 9 is provided with a backplane and a piezoelectric element. The piezoelectric element is capable of changing the intensity at which the backplane is struck in accordance with the level of the drive voltage applied according to the control of the controller 7. When the backplane is thus struck, the internal capacity of the fragrance emitting part 9 momentarily changes, making it possible to change the mixed volume of awakening aroma that is to constitute the fragrance and emit the fragrance stored therein in a desired form.

Specifically, the controller 7 gives a level difference and a phase difference to the sounds respectively outputted from the plural speakers 4 so that the sound image is formed at the desired positions of position D, position A, position C, and position E, along a line LR, for example, using the position of the driver 31 as a reference position. Further, the controller 7 gives a level difference and phase difference in the sounds respectively outputted from the plural speakers 4 so that a sound image is formed at the desired positions of position F, position G, position H, position I, and position J, along a curve RT, for example, using the position of the driver 31 as a reference position. Further, the controller 7 gives a level difference and phase difference in the sounds respectively outputted from the plural speakers 4 so that a sound image is formed at the desired positions of position B and position K, along a line BW, for example, using the position of the driver 31 as a reference position.

Examples of the paths of the formed sound image will now be described.

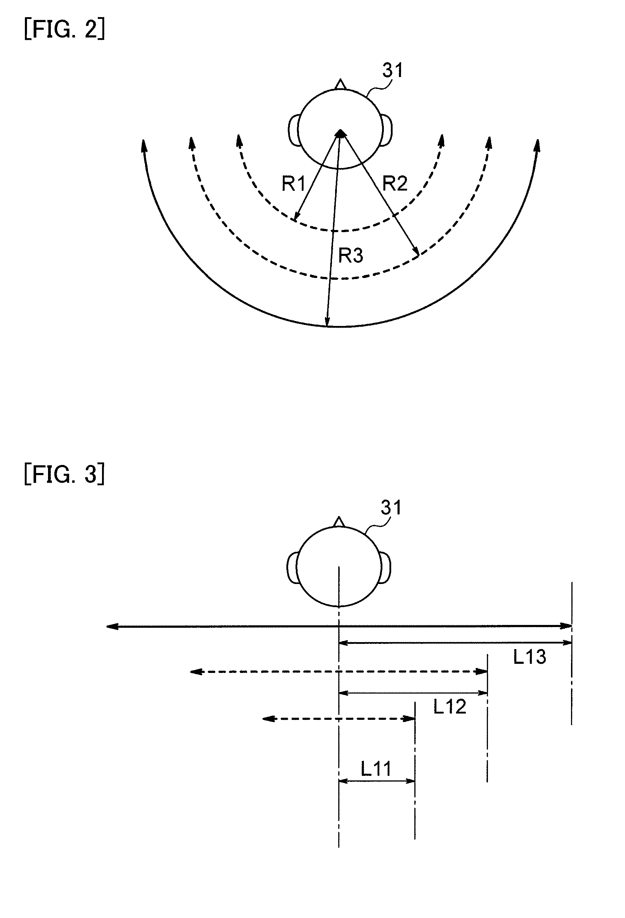

FIG. 2 is a diagram illustrating an example of the paths of the formed sound image.
In the example shown in the figure, with the position of the driver 31 as a reference position, the formed sound image moves around a curve of a radius R1, for example. Further, with the position of the driver 31 as a reference position, the formed sound image may also move around a curve-shape of a radius R2, for example. Additionally, with the position of the driver 31 as a reference position, the formed sound image may also move around a curved shape of a radius R3, for example.

FIG. 3 is a diagram illustrating an example of the paths of the formed sound image.
The example shown in the figure indicates that, with the position of the driver 31 as a reference position, the formed sound image moves along the horizontal direction from the position of a distance L13 on the right of the position of the driver 31 to a position of the distance L13 on the left thereof, passing near the vicinity of the driver 31 therebetween, for example. Further, the example indicates that, with the position of the driver 31 as a reference position, the formed sound image moves along the horizontal direction from the position of a distance L12 on the right of the position of the driver 31 to a position of the distance L12 on the left thereof, passing near the vicinity of the driver therebetween, for example. Additionally, the example indicates that, with the position of the driver 31 as a reference position, the formed sound image moves along the horizontal direction from the position of a distance L11 on the right of the position of the driver 31 to a position of the distance L11 on the left thereof, passing near the vicinity of the driver therebetween, for example.

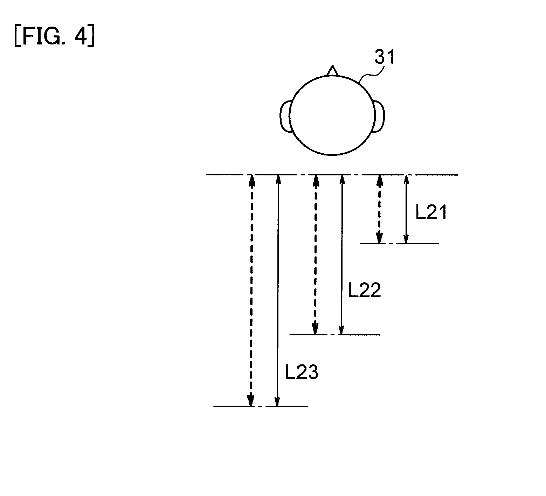

FIG. 4 is a diagram illustrating an example of the paths of the formed sound image.
The example shown in the figure indicates that, with the position of the driver 31 as a reference position, the formed sound image moves along the front-back direction from the position of a distance L23 away from the position of the driver 31 to the vicinity of the driver 31, or in the reverse direction, for example. Further, the example indicates that, with the position of the driver 31 as a reference position, the formed sound image moves along the front-back direction from the position of a distance L22 away from the position of the driver 31 to the vicinity of the driver 31, or in the reverse direction, for example. Additionally, the example indicates that, with the position of the driver 31 as a reference position, the formed sound image moves along the front-back direction from the position of a distance L21 away from the position of the driver 31 to the vicinity of the driver 31, or in the reverse direction, for example.

In this embodiment, the controller 7 controls the speakers 4 to output sounds with various level differences and phases and moves the sound image thus formed by the phase differences of the sounds from the plurality of sound sources in accordance with a predetermined pattern. In this embodiment, such a pattern in which the sound image moves is referred to a "movement pattern."

In this embodiment, the controller 7 controls the speakers 4, causing the movement pattern of the sound image to change to an above-described path, for example, in accordance with the intensity of the sleepy state of the driver based on the bio-information. Specifically, in a case where the driver is in a specific state (sleepy state, for example) based on the bio-information, the controller 7 controls the speakers 4 to form a sound image that moves near the vicinity of the driver.

### First sound image movement control process

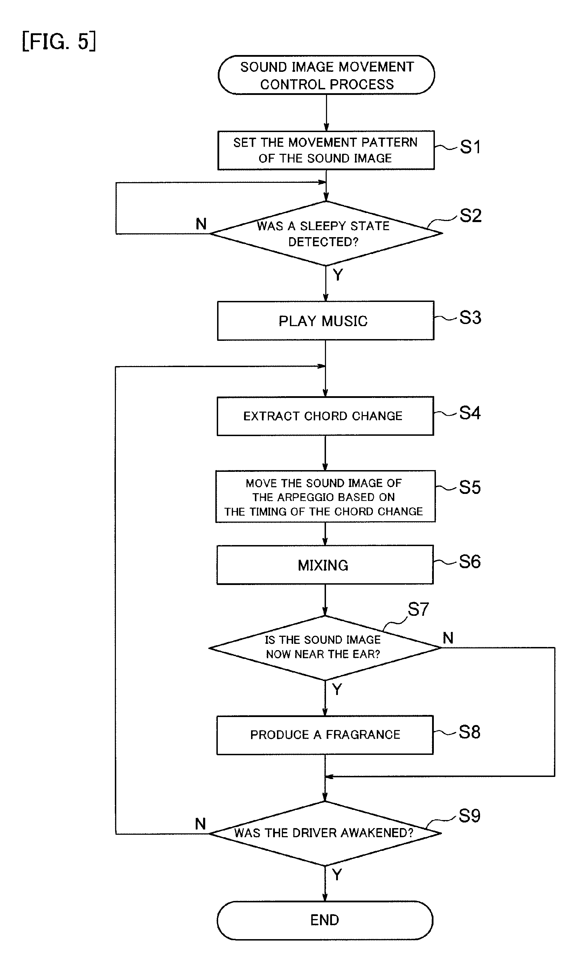

FIG. 5 is a flowchart illustrating an example of the procedure of the sound image movement control process in which the sound image is moved in accordance with a movement pattern.
First, the controller 7 has a variety of path movement patterns related to sound images. The mental state sensor 5 acquires the number of heart beat per unit time (hereinafter simply "heart rate") and the number of respiration per unit time (hereinafter simply "respiratory rate") as the bio-information related to the driver (bio-information acquiring step).

First, in step S1, the controller 7 specifies, acquires, and sets a desired sound image movement pattern. Next, in step S2, the controller 7 determines whether or not the driver has transitioned to a sleepy state (one example of a specific state) based on the heart rate of the driver acquired by the mental state sensor 5. In general, a person's heart rate tends to decrease when he or she feels sleepy.

Here, in this embodiment, the controller 7 determines that the driver is in a sleepy state when the driver's heart rate indicates a decreasing trend. Further, this controller 7 may find a threshold value when the driver's heart rate indicates a decreasing trend, and determine the intensity of the driver's sleepy state by the extent to which the heart rate has decreased from the heart rate threshold value.

In a case where the controller 7 determines that the driver 31 is in a sleepy state based on such logic, the controller 7 executes step S3. In this step S3, the controller 7 (music output control means) outputs sound from the speakers 4 based on music data, and plays music according to the sound thus outputted (sound output step, music playing step). Next, in step S4, the controller 7 (extracting means) extracts a chord change of the music being outputted from the speakers 4 (extracting step).

Next, in step S5, the controller (arpeggio output control means) 7 controls the speakers 4, causing an arpeggio to be outputted based on the timing of this chord change (arpeggio output step). At the same time, the controller 7 (sound image moving means) moves the sound image (sound output step, sound image moving step). Next, in step S6, the controller 7 mixes (adds) that arpeggio with (to) the music being played (adding step).

Next, in step S7, the controller 7 determines whether or not the sound image was formed in the vicinity of the driver 31 by the speakers 4. That is, the controller 7 determines whether or not the sound image formed by the speakers 4 is now near the ear of the driver 31. When the controller 7 forms a sound image in the vicinity of the driver 31, the controller 7 causes the fragrance emitting part 9 to emit fragrance. In this manner, in a case where the controller 7 determines that the driver has transitioned to a specific state based on the bio-information of the driver, fragrance is emitted by the fragrance emitting part 9 in accordance with the distance between the driver 31 and the sound image formed by the speakers 4 (control step). At this time, the controller 7 may control the speakers 4 so that the movement pattern is changed in accordance with the intensity of the sleepy state to which the driver has transitioned.

Next, in step S9, the controller 7 determines whether or not the driver has awakened from a sleepy state based on the driver's heart rate acquired by the mental state sensor 5, using a technique that is substantially the same as that in the aforementioned step S2.

The awakening device 1 of the above-described embodiment comprises mental state acquisition means 5 (mental state sensor) configured to acquire mental state information of the driver, sound output means 4 (speaker) configured to output sound and form a sound image according to the sound outputted, fragrance emitting means 9 (fragrance emitting part, aroma presenting means) configured to emit a fragrance, and control means 7 (controller) configured to cause the fragrance emitting means 9 to emit a fragrance in accordance with the distance between the user and the sound image formed by the sound output means 4 in a case where the user is determined as having transitioned to a specific state based on the mental state of the user.

The awakening method of the above-described embodiment comprises the steps of: a mental state information acquiring step for acquiring mental state information related to the user (driver) by using the mental state information acquisition means 5 (mental state sensor), a sound output step for outputting sound by the sound output means 4 and forming a sound image of the sound outputted, and a control step for causing the fragrance emitting means 9 to emit a fragrance in accordance with the distance between the user (driver) and the sound image formed by the sound output means 4 in a case where it has been determined that the user has transitioned to a specific state based on the mental state information of the user.

With this arrangement, in a case where the user (driver) is in a specific state (a state in which he or she feels sleepy, for example), the user (driver) senses a sound image and senses a fragrance in the vicinity of his or her own person. Note that when a person is exposed to a certain fragrance, the person tends to grow accustom to that fragrance with the passage of time, making it increasingly difficult to sense the fragrance to the same degree. Nevertheless, the control means 5 causes the sound output means 4 to form the sound image that moves, giving the user (driver) the following sensation.

First, people as well as animals are generally instinctively sensitive to the movement of a sound image associated with a body that is visually imperceptible. As a result, even if the user (driver) has temporarily transitioned to a specific state such as sleepy state, upon exposure to the movement of a sound image that is visually imperceptible, the user (driver) focuses on the imperceptible sound image and readily breaks free of that specific state.

That is, an awakening action by the movement of a sound image can compensate for weakening of the fragrance awakening action when the user (driver) grows accustomed to that fragrance. In this embodiment, the timing at which the fragrance is emitted is related to the location of the sound image.

Specifically, in this embodiment, since the amount of stimulation presented to the driver from the sound image is maximized when the sound image is near the driver, synchronizing the aroma with that timing maximizes the total amount of stimulation given to the driver by the sound image and fragrance. As a result, in comparison to simply adding together the sound movement and fragrance, stimulation intensity is maximized and compensation is provided for weakening of the sense of smell by the sound image.

In the awakening device 1 of the above-described embodiment, in addition to the above-described configuration, the mental state information acquisition means further includes bio-information acquisition means configured to acquire bio-information of the user (driver).

In the awakening method of the above-described embodiment, in addition to the steps of the above-described awakening method, the above-described mental state information acquiring step further comprises a bio-information acquiring step of acquiring bio-information of the user (driver).

With this arrangement, it is possible to accurately determine the mental state of the user based on the bio-information of the user. As a result, in a case where the user (driver) is in a specific state (a state in which he or she feels sleepy, for example), the system is designed so that the user (driver) senses a sound image and a fragrance in the vicinity of his or own person and, according to the sound image, is provided with compensation for weakening of the sense of smell as described above.

In the awakening device 1 of the above-described embodiment, in addition to the above-described configuration, the control means 7 (controller) causes the sound output means 4 (speaker) to form a sound image that comes near the vicinity of the user (driver) in a case where it has been determined that the user (driver) has transitioned to a specific state based on the mental state information of the user.

In the awakening method of the above-described embodiment, in addition to the steps of the above-described awakening method, the control step is a step for making the sound output means 4 form a sound image that comes near the vicinity of the user (driver) in a case where it has been determined that the user (driver) has transitioned to a specific state based on the mental state information of the user.

With this arrangement, even if the user (driver) has temporarily transitioned to a specific state (sleepy state, for example), the user (driver) notices and takes an interest in the presence of a sound image approaching his or her own person, and is thus readily awakened from such a specific state.

In the awakening device 1 of the above-described embodiment, in addition to the above-described configuration, the control means 7 (control means) controls the sound forming means 4 (speakers) and make the formed sound image make a movement along a movement pattern.

In the awakening method of the above-described embodiment, in addition to the steps of the above-described awakening method, in the control step the sound output means 4 is controlled to make the formed sound image make a movement along a movement pattern.

With this arrangement, when an appropriate movement pattern is prepared, the user (driver) readily takes an interest in the sound image that moves along the movement pattern, making it possible to more reliably awaken the user (driver) exposed to the movement pattern.

In the awakening device 1 of the above-described embodiment, in addition to the above-described configuration, the control means 7 (controller) controls the sound output means 4 (speakers) and changes the movement pattern in accordance with the intensity of the specific state to which the user (driver) has transitioned.

In the awakening method of the above-described embodiment, in addition to the steps of the above-described awakening method, in the control step the sound output means 4 (speaker) is controlled to change the movement pattern in accordance with the intensity of the specific state to which the user (driver) has transitioned.

With this arrangement, the driver notices a sound image that moves in various forms according to a preferred movement pattern selected in accordance with the intensity of a specific state, such as a sleepy state, causing the driver to awaken and readily break free from that specific state.

In the awakening device 1 of the above-described embodiment, in addition to the above-described configuration, the control means includes music output control means 7 (controller) configured to cause the sound output means to output music, extracting means 7 (controller) configured to extract a chord change of the music, arpeggio output control means 7 (controller) configured to cause the sound output means 4 to output an arpeggio based on the timing of the chord change thus extracted by the extracting means 7 (controller), sound image moving means 7 (controller) configured to move the sound image of the arpeggio, and adding means 7 (controller) configured to add the arpeggio to the music.

In the awakening method of the above-described embodiment, in addition to the steps of the above-described awakening method, the control step further comprises a music playing step for causing the sound output means 4 to output music, an extracting step for extracting a chord change of the music, an arpeggio output step for outputting an arpeggio based on the timing of the chord change thus extracted in the extracting step, a sound image moving step for moving the sound image of the arpeggio, and an adding step for adding the arpeggio to the music.

With this arrangement, the sound image of the arpeggio is moved in synchronization with the timing of a chord change, making it possible to inoffensively awaken the user (driver). The reason the user (driver) can be thus awakened is that the arpeggio is not naturally heard as a part of the music, as a result of the type of mixed sound and the mixing performed with the music.

Further, in this embodiment, a fragrance is emitted in synchronization with the movement of the formed sound image, making the user (driver) become aware of the moving sound image as an visually imperceptible body and no longer recognize the mixed arpeggio as a part of a sound of a musical instrument. To date there have been examples in which an added arpeggio, when simply added, is recognized as a part of the musical instruments and music and thus naturally accepted during listening. The possibility therefore exists that, in such a case, attention will no longer be paid to the movement of the sound image of the arpeggio. For this reason, in this embodiment, fragrance is added to the movement of the sound image, ensuring that the driver always recognizes and pays attention to the movement of the sound image, thereby realizing a full awakening effect.

### Embodiment 2

An awakening device 1a of embodiment 2 has substantially the same configuration and operates substantially in the same manner as that of embodiment 1. The same reference numerals as those employed in FIG. 1 to FIG. 5 of embodiment 1 will therefore be used for the same components and operations, and descriptions thereof will be omitted. The following will describe the awakening device 1a while focusing on unique points.

In embodiment 2, the mental state sensor 5 acquires vehicle behavior information related to the behavior of the vehicle currently driven by the driver, in place of or in addition to bio-information. That is, in embodiment 2, the mental state sensor 5 is a vehicle behavior sensor configured to detect the behavior of the vehicle, for example. This mental state sensor 5 outputs the vehicle behavior information related to the behavior of the vehicle (detection results) to the controller 7. This controller 7 determines whether or not the driver has continued monotonous driving for a certain period of time or longer, for example, based on the vehicle behavior information.

With the awakening device 1a of embodiment 2 having a configuration such as described above, the sound image movement control process of an operation example of the awakening device 1a will now be described.

### Second sound image movement control process

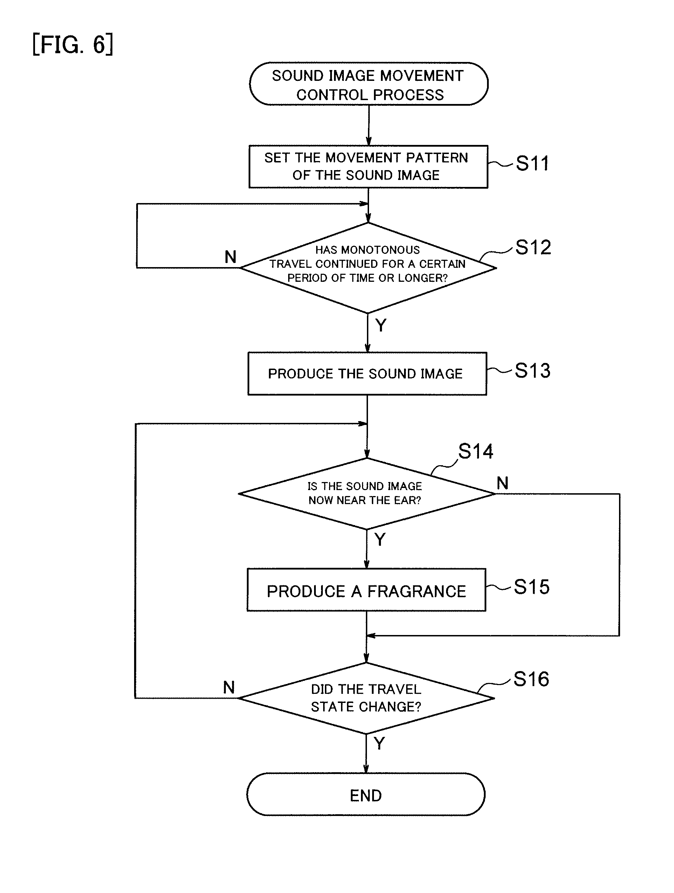

FIG. 6 is a flowchart illustrating an example of the procedure of the sound image movement control process in which the sound image is moved in accordance with a movement pattern.

First, in step S11, the controller 7 specifies and sets a desired sound image movement pattern in substantially the same manner as in the above-described step S 1. In the second sound image movement control process, this controller 7 sets the sound image movement pattern in which a bird moves while chirping, for example.

Next, in step S12, the controller 7 determines whether or not the driver has continued monotonous travel for a certain period of time or longer based on the vehicle behavior information acquired by the mental state sensor 5. The reason for execution of such an determination step is that there is a high possibility that the driver will transition to a sleepy state when monotonous travel continues for a certain period of time or longer.

In a case where the controller 7 determines that the driver has continued monotonous travel for a certain period of time or longer, the controller 7 executes step S13. In this step S13, the controller 7 outputs sound from the speakers 4 based on predetermined music data, and plays music according to the sound thus outputted. With this arrangement, the driver is awakened and released from the sleepy state by the sudden exposure to the played music.

Next, in step S14, the controller 7, similar to the above-described step S7, determines whether or not the sound image was formed in the vicinity of the driver 31 by the speakers 4. That is, the controller 7 determines whether or not the sound image formed by the speakers 4 is now near an ear of the driver 31. In other words, when the controller 7 has formed a sound image in the vicinity of the driver 31, in step S15 the controller 7 causes the fragrance emitting part 9 to emit fragrance similar to step S8. Possible fragrances provided include a fruit fragrance, for example. Other possible fragrances utilized include any such fragrance that is not offensive to the driver.

Next, in step S16, the controller 7 determines whether or not the travel state of the driver has changed according to the mental state sensor 5, using a technique similar to that in the aforementioned step S 11. This controller 7 once again executes steps starting from the above-described step S 14 in a case where the driver travel state has not changed, and ends the sound image movement control process in a case where the driver travel state has changed.

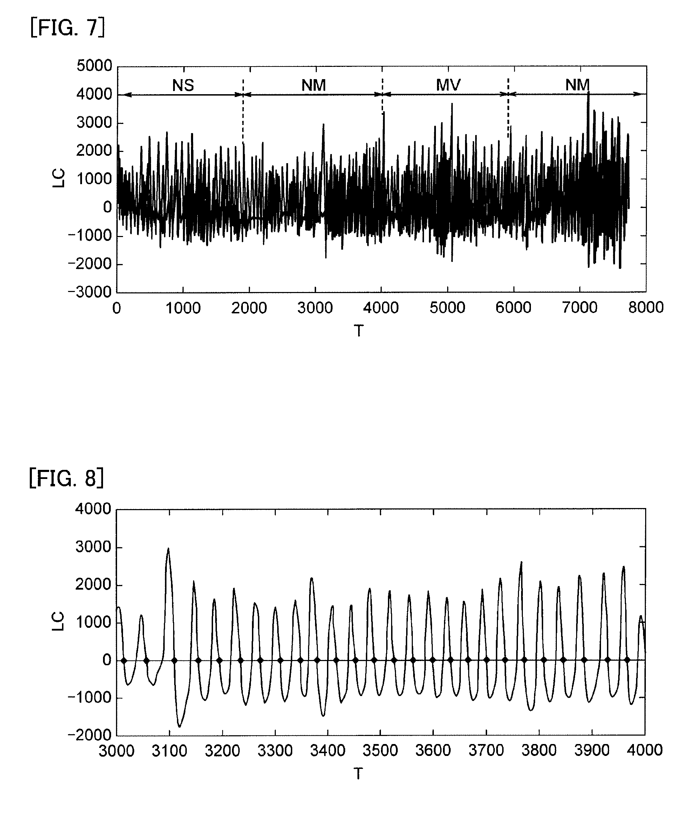

In general, when a person is in a concentration state, the person's breathing becomes shallow, showing a fast rhythm. FIG. 7 is a diagram illustrating an example of all waveforms of the breathing of a driver. Note that in FIG. 7 the vertical axis indicates a depth of breath, that is, lung capacity LC [ml], and the horizontal axis indicates time T [ms].
In the example shown in the figure, the waveform ranges include range NS, range NM, range MV, and range NM. The range NS indicates the state of the driver when a sound image is not formed. The range NM indicates the state of the driver when a sound image is formed but that sound image is not moved. The range MV indicates the state of the driver when a sound image is formed and that sound image is moved. And the range NM indicates the state of the driver when a formed sound image is not moved.

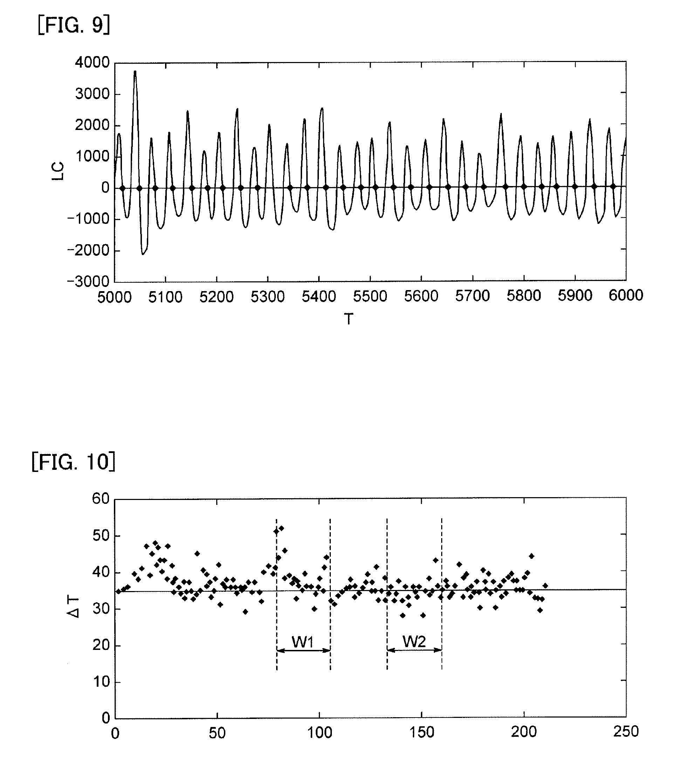

FIG. 8 and FIG. 9 are diagrams respectively illustrating the latter half of the range NM and the latter half of the range MV of FIG. 7, in detail as enlarged. In both FIG. 8 and FIG. 9, the horizontal axis indicates the time T [ms]), and the vertical axis indicates the depth of breath, that is, the lung capacity [ml].

In both FIG. 8 and FIG. 9, a mark is placed in each location where the graph intersects with the origin point 0 [ml] of the vertical axis. When a comparison is made with reference to these drawings, the sound source does not move in the range NM illustrated in FIG. 8, indicating that the driver's breathing is slow. On the other hand, in the range MV illustrated in FIG. 9, the sound image moves in accordance with the movement pattern, drawing the attention of the driver to this sound image and making the breathing of the driver somewhat harder.

FIG. 10 is a diagram illustrating an example of the change in an interval ΔT of the zero cross-points of all waveforms of the breathing of the driver illustrated in FIG. 7. A range W1 indicates the state of the driver in the range NM illustrated in the above-described FIG. 8, and a range W2 indicates the state of the driver in the range MV illustrated in the above-described FIG. 9. When W1 and W2 are compared in high volume, the interval ΔT of the zero cross-points of the driver in the range W2 is found to be shorter. This indicates that the breathing of the driver is hard and that the driver is more awake in the range W2.

Note that the embodiments of the present invention are not limited to the above, and various modifications are possible. In the following, details of such modifications will be described one by one.
While in the above-described embodiments a driver was given as an example of the user, the present invention is not limited thereto, allowing the user to be any person who transitions from one state to another. Further, the awakening devices 1 and 1a of the above-described embodiments may be mounted not only in a vehicle that travels on a road as described above, but in any moving object such as a vehicle so that the device is used to support the safe driving of the operator of that moving object. Further, the awakening devices 1 and 1a of the above-described embodiments may be provided on a desk, a chair, or the like as a doze prevention device for persons who work in an office. The awakening devices 1 and 1a of the above-described embodiments may also be provided on a desk, a chair, or the like as a doze prevention device used in a household.

While in this embodiment a bird that moves while chirping has been given as an example of the movement pattern of the sound image, various other forms may be employed. That is, in this embodiment, various other forms may be employed as long as a sound image of a moving body is formed in such a manner that, when the user transitions to a specific state, the moving body is perceived as coming closer to the user and a fragrance related to that moving body is emitted.

Specifically, possible forms employed include a bee that approaches following the aroma of a flower. Specifically, one possible example is the sound of the wings of a bee flying about, approaching and moving away from the driver. Further, in the above-described embodiment, possible forms employed include an animal that approaches following the aroma of a tree. Specifically, possible examples include the sound of the feet of an animal approaching the driver, or the call of the animal gradually coming closer to the driver. Further, in the above-described embodiment, possible forms employed include a bird that approaches following the aroma of fruit. Specifically, one possible example is the sound of the flapping wings and chirping of the bird gradually coming closer.

Further, in the above-described embodiment, the awakening device 1 may be provided with producing means configured to momentary act on the driver only. With this arrangement, it is possible to simply produce the fragrance within the vehicle so that it is not thick, readily disappears, and has minimal impact on other riders. Further, with this arrangement, the fragrance is not continually produced but rather produced in association with the sound image, making it difficult for the driver to grow accustom to the fragrance and for the driver's sense of smell to weaken with respect to a newly produced fragrance. Further, associating the fragrance with the movement of the sound image makes it possible to draw the driver's attention and increase his or her focus.

Note that in the above-described embodiment, the location in which the fragrance emitting part 9 is arranged may be away from the arranged location of the speakers 4. This is because humans tend to have an extremely weak sense of direction in terms of the direction from which a fragrance arrives and, for example, in a case where a person smells a certain fragrance, cannot sense the direction from which that fragrance came.

Here, these embodiments differ from so-called virtual reality technology in the following way. The embodiments involve technology that does not create a virtual environment by sound and fragrance (aroma), but rather controls the method of presentation of sound and fragrance in accordance with the mental state of the user, achieving a user awakening effect. Thus, based on this point, the embodiments differ from virtual reality technology.

## Claims

1. An awakening device comprising:
mental state information acquisition means configured to acquire mental state information of a user;
sound output means configured to output sound and form a sound image according to the sound outputted;
fragrance emitting means configured to emit a fragrance; and
control means configured to cause said fragrance emitting means to emit a fragrance in accordance with a distance between said user and the sound image formed by said sound output means in a case where it has been determined that said user has transitioned to a specific state based on the mental state of said user.

2. The awakening device according to claim 1, **characterized in that:**
said mental state information acquisition means includes bio-information acquisition means configured to acquire bio-information of said user.

3. The awakening device according to claim 1 or 2, **characterized in that:**
said control means causes said sound output means to form a sound image that approaches the vicinity of said user in a case where it has been determined that said user has transitioned to a sleepy state based on the mental state information of said user.

4. The awakening device according to claim 1 or 2, **characterized in that:**
said control means controls said sound output means and makes the formed sound image make a movement along a movement pattern.

5. The awakening device according to claim 4, **characterized in that:**
said control means controls said sound output means and changes said movement pattern in accordance with an intensity of the specific state to which said user has transitioned.

6. The awakening device according to claim 1 or 3, **characterized in that:**
said control means includes:
music output control means configured to cause said sound output means to output music;
extracting means configured to extract a chord change of said music;
arpeggio output control means configured to cause said sound output means to output an arpeggio based on the timing of the chord change extracted by said extracting means;
sound image moving means configured to move a sound image of said arpeggio; and
adding means configured to add said arpeggio to said music.

7. An awakening method comprising the steps of:
a mental state information acquiring step for acquiring mental state information related to a user by using user mental state information acquisition means;
a sound output step for outputting sound by sound output means and forming a sound image of the sound outputted; and
a control step for causing said fragrance emitting means to emit a fragrance in accordance with a distance between said user and the sound image formed by said sound output means in a case where it has been determined that said user has transitioned to a specific state based on the mental state information of said user.

8. The awakening method according to claim 7, **characterized in that:**
said mental state information acquiring step includes a bio-information acquiring step for acquiring bio-information of said user.

9. The awakening method according to claim 7 or 8, **characterized in that:**
said control step is a step for making said sound output means form a sound image that approaches the vicinity of said user in a case where it has been determined that said user has transitioned to a sleepy state based on the mental state information of said user.

10. The awakening method according to claim 7 or 8, **characterized in that:**
in said control step said sound output means is controlled to make the formed sound image make a movement along a movement pattern.

11. The awakening method according to claim 10, **characterized in that:**
in said control step said sound output means is controlled to change said movement pattern in accordance with an intensity of the specific state to which said user has transitioned.

12. The awakening method according to claim 7 or 8, **characterized in that:**
said control step further includes:
a music playing step for causing said sound output means to output music;
an extracting step for extracting a chord change of said music;
an arpeggio output step for outputting an arpeggio based on the timing of the chord change extracted in said extracting step;
a sound image moving step for moving a sound image of said arpeggio; and
an adding step for adding said arpeggio to said music.
